# EUROPEAN PATENT APPLICATION

(11) **EP 4 755 644 A1**
(43) Date of publication of application: **10.06.2026**
(21) Application number: 25221484.6
(22) Date of filing: 08.12.2025
(51) Int. Cl.: B41J 2/175, B41J 2/18

(54) **COUPLING MEMBER AND INKJET RECORDING DEVICE**

(30) Priority: 09.12.2024 JP 2024214274
(71) Applicant: Kyocera Document Solutions Inc., Osaka-shi, Osaka 540-8585 (JP)
(72) Inventor: MIYAKOSHI, Naoto, Osaka, 540-8585 (JP)
(74) Representative: BRP Renaud & Partner mbB Rechtsanwälte Patentanwälte Steuerberater

(57) **Abstract**

A coupling member (1000) includes a first member (1) and a second member (2). The first member (1) includes a plurality of engaging holes (10), and the second member (2) includes a plurality of engaging protrusions (20). The plurality of engaging holes (10) include one pair of first engaging holes (11) and one pair of second engaging holes (12). The plurality of engaging protrusions (20) include one pair of first engaging protrusions (21) and one pair of second engaging protrusions (22). In a state where the first engaging hole (11) and the first engaging protrusion (21) are engaged with each other, the second member (2) is displaced in the circumferential direction with respect to the first member (1), so that the second engaging protrusion (22) reaches a position for engaging the second engaging hole (12).

## Description

### BACKGROUND

The present disclosure relates to a coupling member that allows liquid to flow, and an inkjet recording device including the same.

The inkjet recording device uses ink as the liquid. In other words, the inkjet recording device allows the ink to flow in the device.

The inkjet recording device includes a coupling member for allowing the ink to flow. The coupling member is connected to another coupling member.

### SUMMARY

A coupling member according to a first aspect of the present disclosure includes a first member and a second member. The first member is a cylindrical body having a central axis extending in a predetermined direction, which has a liquid flowing passage inside. The second member is a cylindrical body having a central axis, which is connected to the first member in the axis direction, and has a liquid flowing passage inside, so as to allow liquid to flow in the axis direction together with the first member. The first member has a plurality of engaging holes, which are arranged with intervals in a circumferential direction, and are recessed in a radial direction from a circumference surface of the first member. The second member has a plurality of engaging protrusions, which are arranged with intervals in a circumferential direction, and protrude in the radial direction from a circumference surface of the second member, so as to respectively engage the plurality of engaging holes in the axis direction by being respectively inserted into the plurality of engaging holes in the radial direction. The plurality of engaging holes include at least one pair of first engaging holes and at least one pair of second engaging holes. The plurality of engaging protrusions include the same number of pairs of first engaging protrusions as the pairs of first engaging holes so as to respectively engage the pairs of first engaging holes, and the same number of pairs of second engaging protrusions as the pairs of second engaging holes so as to respectively engage the pairs of second engaging holes. When one of the first member and the second member is inserted into the other in the axis direction, the first engaging hole and the first engaging protrusion are engaged with each other, while the second engaging hole and the second engaging protrusion are not engaged. In the state where the first engaging hole and the first engaging protrusion are engaged with each other, the second member is displaced in the circumferential direction with respect to the first member, so that the second engaging protrusion reaches a position for engaging the second engaging hole while maintaining the engagement between the first engaging hole and the first engaging protrusion, and hence the first member and the second member are connected to each other in the axis direction.

An inkjet recording device according to a second aspect of the present disclosure includes the coupling member described above, in which the liquid is ink, and printing is performed using the ink.

### BRIEF DESCRIPTION OF THE DRAWINGS

FIG. 1 is a schematic diagram of an inkjet recording device according to one embodiment.
FIG. 2 is a plan view of a recording unit of the inkjet recording device according to one embodiment.
FIG. 3 is a perspective view of a coupling member according to one embodiment.
FIG. 4 is a perspective view of the coupling member that is rotated by 90 degrees about a central axis from the state illustrated in FIG. 3.
FIG. 5 is an exploded perspective view of the coupling member according to one embodiment.
FIG. 6 is a schematic cross-sectional view of the coupling member according to one embodiment.
FIG. 7 is a schematic cross-sectional view of the coupling member when another coupling member is connected to the state illustrated in FIG. 6.
FIG. 8 is a schematic cross-sectional view of a first member (a first engaging hole) according to one embodiment (a cross-sectional view taken along a plane including the central axis).
FIG. 9 is a schematic cross-sectional view of the first member (a second engaging hole) according to one embodiment (a cross-sectional view taken along a plane including the central axis).
FIG. 10 is a schematic cross-sectional view of the first member according to one embodiment (a cross-sectional view taken along a plane perpendicular to the central axis).
FIG. 11 is a schematic cross-sectional view of a second member according to one embodiment (a cross-sectional view taken along a plane including the central axis).
FIG. 12 is a schematic cross-sectional view of the second member according to one embodiment (a cross-sectional view taken along a plane perpendicular to the central axis).
FIG. 13 is a schematic cross-sectional view for explaining an assembling work of the coupling member (a first work) according to one embodiment.
FIG. 14 is a schematic cross-sectional view for explaining an assembling work of the coupling member (a second work) according to one embodiment.

### DETAILED DESCRIPTION

### < Structure of Inkjet Recording Device >

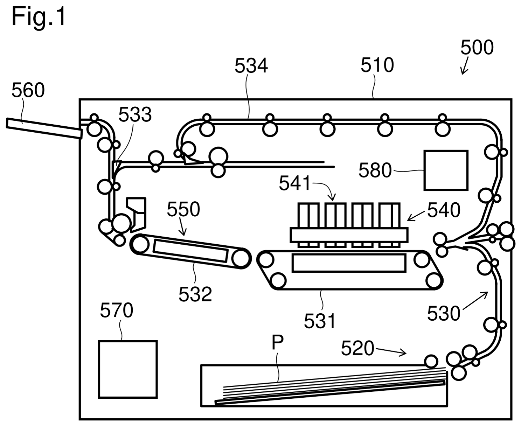

As illustrated in FIG. 1, an inkjet recording device 500 of this embodiment is an inkjet recording type printer. The inkjet recording device 500 includes a device main body 510, a paper sheet feeding unit 520, a paper sheet conveying unit 530, a recording unit 540, a drying unit 550, a paper sheet discharge unit 560, and a control unit 570.

The paper sheet feeding unit 520 stores paper sheets P as recording media. The paper sheet feeding unit 520 sends out the paper sheets P one by one. The paper sheet conveying unit 530 conveys the paper sheet P sent out from the paper sheet feeding unit 520. The paper sheet P passes through the recording unit 540 and the drying unit 550 in this order. The recording unit 540 performs recording (i.e., image formation) on the paper sheet P. In the drying unit 550, an image (i.e., ink) recorded on the paper sheet P is dried. After that, the paper sheet conveying unit 530 discharges the paper sheet P to the paper sheet discharge unit 560.

The paper sheet conveying unit 530 includes a first belt conveyor unit 531 and a second belt conveyor unit 532. The first belt conveyor unit 531 and the second belt conveyor unit 532 each have an endless belt stretched in a manner capable of turning. The first belt conveyor unit 531 and the second belt conveyor unit 532 each has an outer circumference surface of the belt that sucks and holds the paper sheet P. In this state, the belt turns so as to convey the paper sheet P.

When performing two-sided recording, after one side is recorded, the paper sheet conveying unit 530 allows a branching unit 533 to send the paper sheet P to a reverse conveying unit 534. The reverse conveying unit 534 switchbacks the paper sheet P so as to return the paper sheet P to an upstream side of the recording unit 540 in a paper sheet conveying direction. In this way, the front and back sides of the paper sheet P are reversed. The paper sheet conveying unit 530 conveys the paper sheet P again, in the state where the front and back sides are reversed.

The recording unit 540 is disposed above the first belt conveyor unit 531 so as to face the paper sheet P, which is conveyed by the first belt conveyor unit 531 (specifically, the belt), with a predetermined space therebetween. The recording unit 540 includes a line-type inkjet recording head 541.

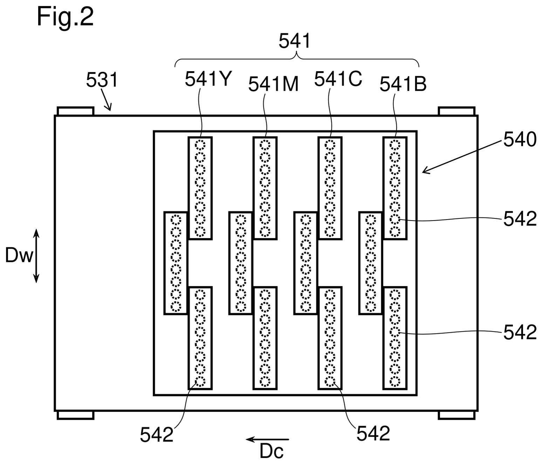

As illustrated in FIG. 2, the recording head 541 includes recording heads 541B, 541C, 541M and 541Y corresponding to black, cyan, magenta and yellow colors, each of which includes a plurality of (e.g., three) heads. The three recording heads 541 of each color are arranged zigzag in a paper sheet width direction Dw perpendicular to a paper sheet conveying direction Dc.

The recording head 541 includes a plurality of ink ejection nozzles 542. The plurality of ink ejection nozzles 542 are arranged in the paper sheet width direction Dw. The recording unit 540 allows the recording heads 541B, 541C, 541M and 541Y to eject ink toward the paper sheet P that is being conveyed by the first belt conveyor unit 531. In this way, an image is recorded on the paper sheet P.

In addition, as illustrated in FIG. 1, the drying unit 550 is disposed on a downstream side of the recording unit 540 in the paper sheet conveying direction. The second belt conveyor unit 532 conveys the paper sheet P in the drying unit 550. The drying unit 550 dries the ink adhered to the paper sheet P while the second belt conveyor unit 532 is conveying the paper sheet P.

Although not illustrated, the control unit 570 includes various electronic components such as a processing circuit (e.g., a CPU) and memory (e.g., a ROM and a RAM). The control unit 570 controls operations of individual components of the inkjet recording device 500 on the basis of a control program and control data. The paper sheet feeding unit 520, the paper sheet conveying unit 530, the recording unit 540 and the drying unit 550 are instructed separately from the control unit 570, so as to perform the recording on the paper sheet P in cooperation.

In addition, the inkjet recording device 500 includes an ink feeding unit 580. The ink feeding unit 580 holds an ink container (not shown). The ink container stores ink. The ink feeding unit 580 feeds ink from the ink container to the device main body 510. The ink is fed to the recording unit 540. The recording head 541 ejects the ink fed from the ink container.

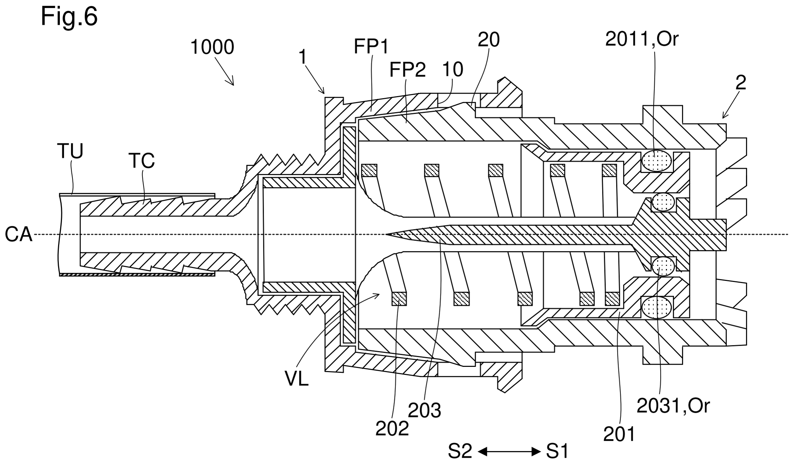

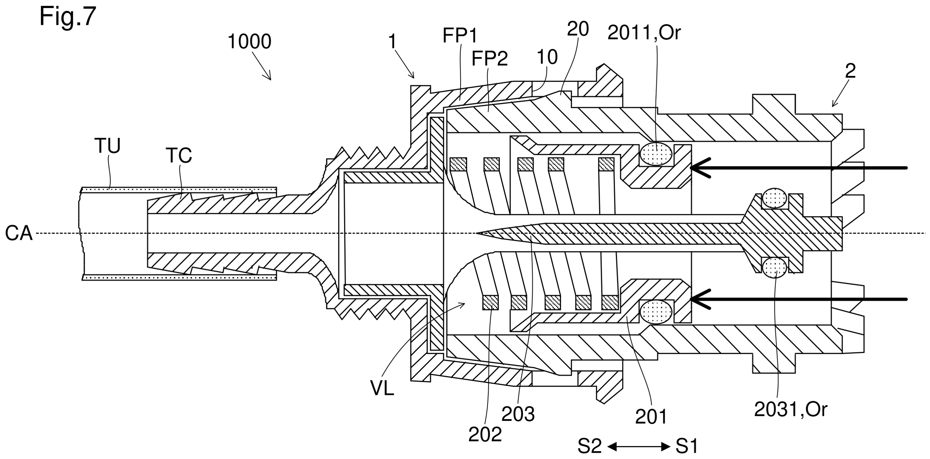

Here, a tube TU (see FIG. 6 and FIG. 7) is used for feeding ink from the ink feeding unit 580 to the device main body 510. The tube TU allows the ink to flow.

The tube TU is disconnected in the middle. A coupling member 1000 described later is disposed at the disconnected part of the tube TU. The coupling member 1000 relays the disconnected part of the tube TU, and allows the ink to flow in the disconnected part of the tube TU. In this structure, the ink corresponds to "liquid".

### < Structure of Coupling Member >

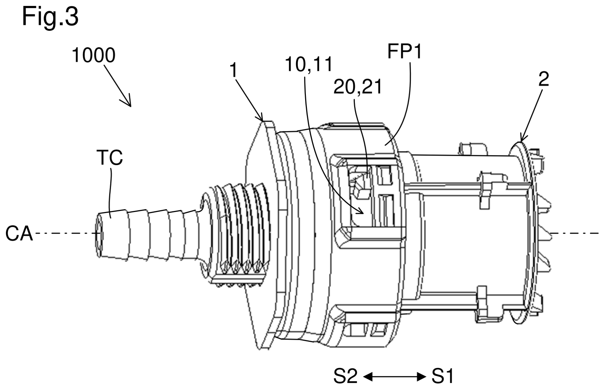

The inkjet recording device 500 includes the coupling member 1000 as illustrated in FIGS. 3 to 7. The coupling member 1000 is connected to another coupling member (not shown). The coupling member 1000 is connected to the tube TU. The another coupling member is also connected to the tube TU. When the coupling member 1000 is connected to the another coupling member, the ink can flow in the disconnected part of the tube TU.

The coupling member 1000 includes a first member 1 and a second member 2. The first member 1 and the second member 2 are attached to each other so as to constitute the coupling member 1000. The first member 1 and the second member 2 are each a cylindrical body having a central axis CA extending in a predetermined direction. The first member 1 and the second member 2 are each a resin molded product.

In the following description, the direction in which the central axis CA extends (the direction corresponding to the "predetermined direction") is referred to as an "axis direction", and the circumferential direction around the central axis CA is referred to as a "circumferential direction", and the direction perpendicular to the central axis CA is referred to as an "radial direction". In the radial direction, the direction approaching the central axis CA is referred to as "inward in a radial direction", and the direction separating from the central axis CA is referred to as "outward in the radial direction".

The first member 1 is connected to the tube TU. The second member 2 is connected to the first member 1 in the axis direction. In addition, the second member 2 is connected to another coupling member in the axis direction. The first member 1 and the second member 2 each has an ink flowing passage inside (i.e., inside the cylindrical body), so as to allow the ink to flow in the axis direction. In other words, the first member 1 and the second member 2 are each the cylindrical body having the axis direction as an ink flowing direction. When the first member 1 and the second member 2 are connected to each other in the axis direction, the flowing passages of the first member 1 and the second member 2 communicate to each other in the axis direction.

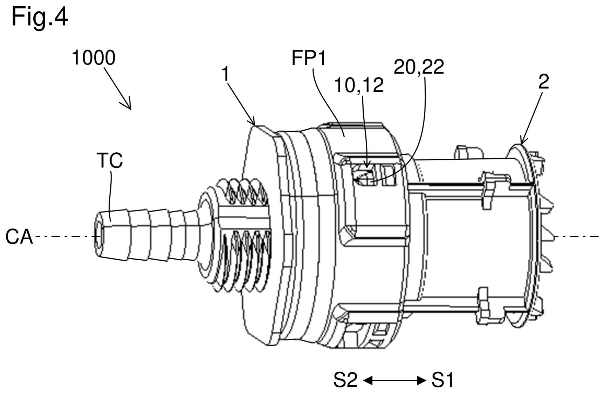

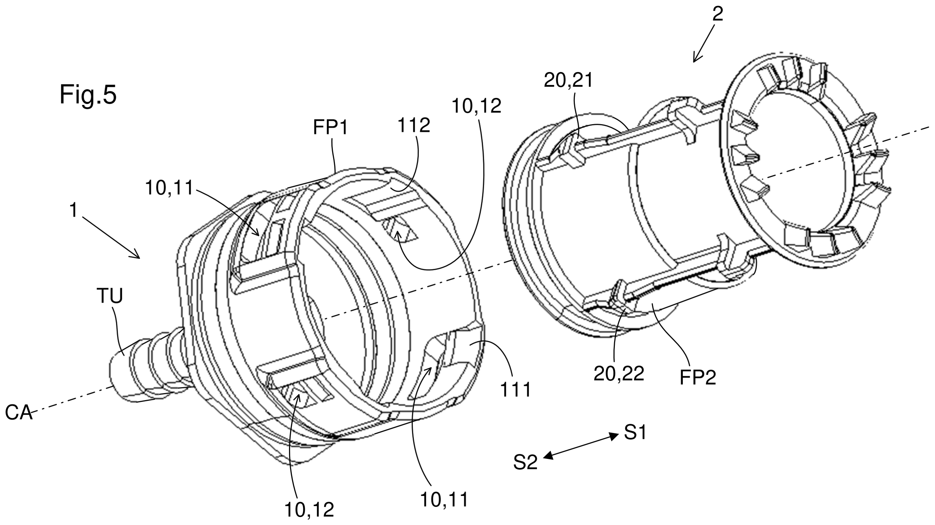

Note that FIG. 3 illustrates a state where the first member 1 and the second member 2 are connected to each other in the axis direction. FIG. 4 illustrates the coupling member 1000 that is rotated by 90 degrees from the state illustrated in FIG. 3. FIG. 5 illustrates a state where the first member 1 and the second member 2 are separated from each other in the axis direction.

In addition, FIG. 6 illustrates a cross-sectional view of the first member 1 and the second member 2 connected to each other in the axis direction. FIG. 7 illustrates a cross-sectional view of the coupling member 1000 (specifically, the second member 2) and another coupling member connected to each other in the axis direction. FIG. 6 and FIG. 7 correspond to cross-sectional views of the coupling member 1000 taken along a plane including the central axis CA (i.e., a plane parallel to the central axis CA). Note that FIG. 6 and FIG. 7 schematically illustrate cross-sectional structures of the coupling member 1000, and do not show actual dimensions, shapes, and the like.

In the following description, one of both sides of the coupling member 1000 in the axis direction, which is the side the second member 2 is connected to the first member 1, is referred to as an axis direction one side S1, and the opposite side thereof is referred to as an axis direction other side S2. The direction of an arrow S1 is the axis direction one side S1, and the direction of an arrow S2 is the axis direction other side. In each of the first member 1 and the second member 2, the ink may flow from the axis direction one side S1 to the axis direction other side S2, or the ink may flow from the axis direction other side S2 to the axis direction one side S1.

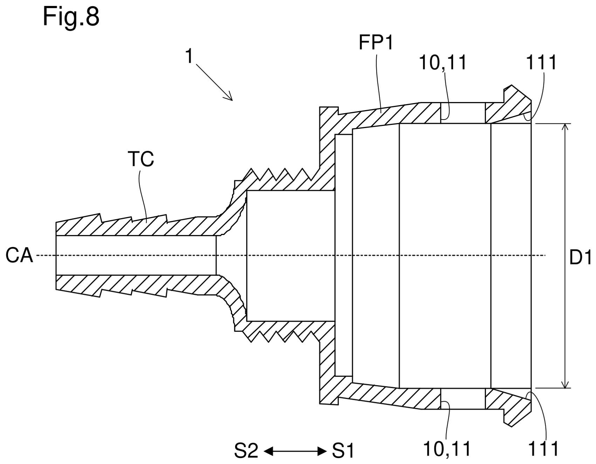

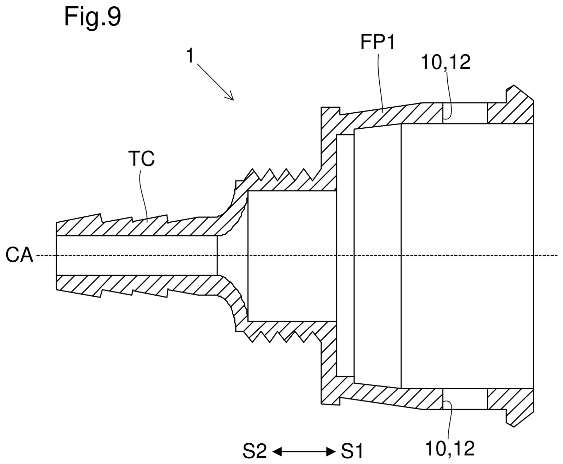

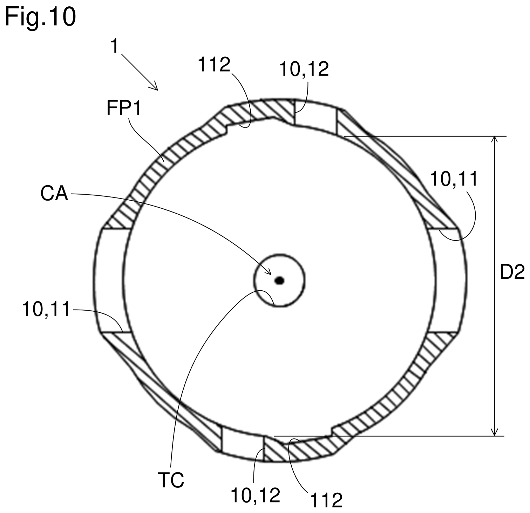

The first member 1 has a cross-sectional structure as illustrated in FIGS. 8 to 10. FIG. 8 corresponds to a cross-sectional view of the first member 1 taken along a plane including the central axis CA (i.e., a plane parallel to the central axis CA) so that a first engaging hole 11 is cut by the plane. FIG. 9 corresponds to a cross-sectional view of the first member 1 taken along a plane including the central axis CA (i.e., a plane parallel to the central axis CA) so that a second engaging hole 12 is cut by the plane. FIG. 10 corresponds to a cross-sectional view of the first member 1 taken along a plane perpendicular to the central axis CA so that an engaging hole 10 is cut by the plane. Note that FIGS. 8 to 10 schematically illustrate cross-sectional structures of the first member 1, and do not show actual dimensions, shapes, and the like.

The first member 1 includes a first fitting part FP1. The first fitting part FP1 is a main body part of the first member 1. The first fitting part FP1 is cylindrical about the central axis CA.

The first member 1 includes a tube connecting part TC. The tube connecting part TC is a part for connecting to the tube TU (see FIG. 6 and FIG. 7). The tube connecting part TC is cylindrical about the central axis CA, and is positioned on the axis direction other side S2 of the first fitting part FP1. When the tube connecting part TC is inserted into the tube TU inward in the radial direction, the tube TU is connected to the first member 1.

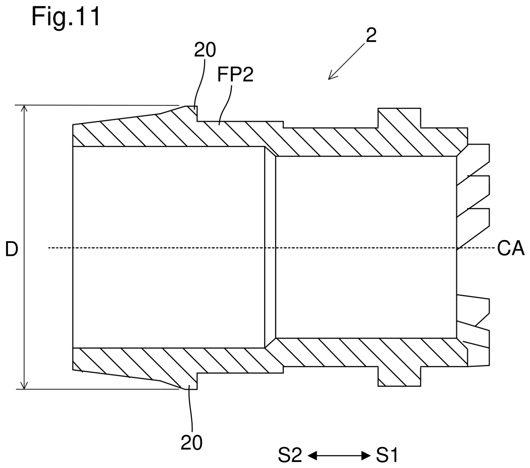

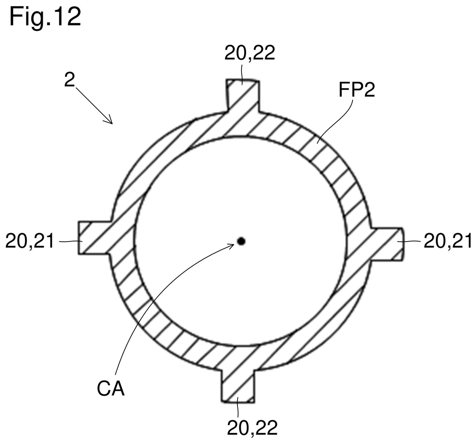

The second member 2 has the cross-sectional structure as illustrated in FIG. 11 and FIG. 12. FIG. 11 corresponds to a cross-sectional view of the second member 2 taken along a plane including the central axis CA (i.e., a plane parallel to the central axis CA) so that an engaging protrusion 20 is cut by the plane. FIG. 12 corresponds to a cross-sectional view of the second member 2 taken along a plane perpendicular to the central axis CA so that the engaging protrusion 20 is cut by the plane. Note that FIG. 11 and FIG. 12 schematically illustrate cross-sectional structures of the second member 2, and do not show actual dimensions, shapes, and the like.

The second member 2 includes a second fitting part FP2. The second fitting part FP2 is a main body part of the second member 2. The second fitting part FP2 is cylindrical about the central axis CA.

The second fitting part FP2 is disposed inward in the radial direction of the first fitting part FP1. The second fitting part FP2 is inserted into the first fitting part FP1 from the axis direction one side S1. A part of the second member 2 on the axis direction one side S1 with respect to the second fitting part FP2 is connected to another coupling member.

As illustrated in FIG. 6 and FIG. 7, the second member 2 holds a valve mechanism VL inward in the radial direction. In other words, the coupling member 1000 includes the valve mechanism VL inward in the radial direction. The valve mechanism VL includes a hollow movable valve 201, a compression coil spring 202 and a support rod 203. The hollow movable valve 201 and the support rod 203 are each a resin molded product.

The valve mechanism VL includes a valve casing. The second member 2 functions as the valve casing. In other words, the second member 2 can be said to be a component of the valve mechanism VL.

The hollow movable valve 201 is disposed inward in the radial direction of the second member 2. The hollow movable valve 201 is cylindrical about the central axis CA. The ink flows inward in the radial direction of the hollow movable valve 201, in the axis direction.

The hollow movable valve 201 includes a seal section 2011 on the outer circumference surface. The seal section 2011 is a part of the hollow movable valve 201 on which a seal member Or is disposed. The seal member Or on the seal section 2011 is an O-ring made of an elastic material such as rubber. When the seal member Or fits on an outer circumference surface of the hollow movable valve 201, the seal section 2011 is formed. An outer circumference part of the seal member Or of the seal section 2011 makes intimate contact with an inner circumference surface of the second member 2. In this way, ink flow in the axis direction outward in the radial direction of the hollow movable valve 201 is restricted.

The compression coil spring 202 is disposed inward in the radial direction of the second member 2. The compression coil spring 202 generates a biasing force in the axis direction.

The support rod 203 extends in the axis direction. The support rod 203 is disposed so as to penetrate the hollow movable valve 201 in the axis direction inward in the radial direction of the second member 2. In other words, the support rod 203 is disposed inward in the radial direction of the hollow movable valve 201. In addition, the support rod 203 penetrates the compression coil spring 202 in the axis direction inward in the radial direction of the second member 2. The support rod 203 is not displaced in the axis direction with respect to the second member 2.

The support rod 203 has a seal section 2031 on the outer circumference surface. The seal section 2031 is a part of the support rod 203 on which the seal member Or is disposed. The seal member Or of the seal section 2031 is an O-ring made of an elastic material such as rubber. When the seal member Or fits on an outer circumference surface of the support rod 203, the seal section 2031 is formed. An outer circumference part of the seal member Or of the seal section 2031 can make intimate contact with an inner circumference surface of the hollow movable valve 201.

When the coupling member 1000 is not connected to another coupling member, it is in the state illustrated in FIG. 6. In this state, the seal section 2031 makes intimate contact with the inner circumference surface of the hollow movable valve 201. In this way, ink flow inward in the radial direction of the second member 2 is restricted. In other words, ink flow inward in the radial direction of the coupling member 1000 is restricted.

When the coupling member 1000 is connected to another coupling member, it is in the state illustrated in FIG. 7. In this state, another coupling member is inserted from the axis direction one side S1 to the axis direction other side S2, inward in the radial direction of the second member 2. In this way, the hollow movable valve 201 is pressed by the another coupling member from the axis direction one side S1 to the axis direction other side S2. Note that the hollow movable valve 201 is pressed in the direction shown by thick arrows in FIG. 7.

In this case, the hollow movable valve 201 is displaced from the axis direction one side S1 to the axis direction other side S2, against the biasing force of the compression coil spring 202. In this way, a periphery of the seal section 2031 is opened, and hence ink can flow in the axis direction in the periphery of the support rod 203.

### < Connection Structure of First Member and Second Member >

As illustrated in FIGS. 8 to 10, the first member 1 has a plurality of the engaging holes 10 in the first fitting part FP1. For instance, there are four engaging holes 10.

FIG. 8 illustrates a cross-sectional structure of the first member 1 (the first engaging hole 11) taken along a plane including the central axis CA. FIG. 9 illustrates a cross-sectional structure of the first member 1 (the second engaging hole 12) taken along a plane including the central axis CA. FIG. 10 illustrates a cross-sectional structure of the first member 1 (the first engaging hole 11 and the second engaging hole 12) taken along a plane perpendicular to the central axis CA.

As illustrated in FIG. 11 and FIG. 12, the second member 2 has a plurality of the engaging protrusions 20 on the second fitting part FP2. There are the engaging protrusions 20 of the same number as the engaging holes 10. In other words, if there are four engaging holes 10, there are four engaging protrusions 20. Each of the plurality of engaging holes 10 is assigned to each of the engaging protrusions 20.

FIG. 11 illustrates a cross-sectional structure of the second member 2 (the engaging protrusion 20) taken along a plane including the central axis CA. FIG. 12 illustrates a cross-sectional structure of the second member 2 (a first engaging protrusion 21 and a second engaging protrusion 22), taken along a plane perpendicular to the central axis CA. Note that shapes of the first engaging protrusion 21 and the second engaging protrusion 22 are the same as each other. For this reason, the cross sections of the first engaging protrusion 21 and the second engaging protrusion 22 taken along a plane including the central axis CA have the same cross-sectional structure.

The plurality of engaging holes 10 are arranged with intervals in the circumferential direction. The plurality of engaging holes 10 each penetrates the first fitting part FP1 in the radial direction. In other words, the first fitting part FP1 has a plurality of recesses recessed from a circumference surface of the first fitting part FP1 in the radial direction. Each of the plurality of recesses is the engaging hole 10.

The plurality of engaging protrusions 20 are arranged with intervals in the circumferential direction. Each of the plurality of engaging protrusions 20 protrudes from an outer circumference surface of the second fitting part FP2 outward in the radial direction. In other words, the second fitting part FP2 has a plurality of protrusions protruding from the circumference surface of the second fitting part FP2 in the radial direction. Each of the plurality of protrusions is the engaging protrusion 20. The plurality of engaging protrusions 20 have the same shape.

In the state where the first member 1 and the second member 2 are connected to each other in the axis direction, each of the plurality of engaging protrusions 20 is inserted into the corresponding engaging hole 10 from inward in the radial direction to outward in the radial direction. In this way, each of the plurality of engaging protrusions 20 is engaged with the corresponding engaging hole 10 in the axis direction.

The engaging holes 10 include the first engaging hole 11 and the second engaging hole 12. The engaging protrusions 20 include the first engaging protrusion 21 and the second engaging protrusion 22. The first engaging hole 11 and the first engaging protrusion 21 are engaged with each other in the axis direction, and the second engaging hole 12 and the second engaging protrusion 22 are engaged with each other in the axis direction.

The first fitting part FP1 is provided with two first engaging holes 11 constituting a pair, and two second engaging holes 12 constituting a pair. In other words, the plurality of engaging holes 10 includes the pair of first engaging holes 11 and the pair of second engaging holes 12.

In addition, the second fitting part FP2 is provided with two first engaging protrusions 21 constituting a pair, and two second engaging protrusions 22 constituting a pair. Note that the pair of first engaging protrusions 21 are respectively engaged with the pair of first engaging holes 11. The pair of second engaging protrusions 22 are respectively engaged with the pair of second engaging holes 12. In other words, the plurality of engaging protrusions 20 includes the same number of pairs of first engaging protrusions 21 as the pairs of first engaging holes 11, so as to respectively engage the pairs of first engaging holes 11, and the same number of pairs of second engaging protrusions 22 as the pair of second engaging holes 12, so as to respectively engage the pairs of second engaging holes 12.

The pair of first engaging holes 11 are disposed at point-symmetric positions with respect to the central axis CA viewed from the axis direction. The pair of second engaging holes 12 are disposed at point-symmetric positions with respect to the central axis CA viewed from the axis direction. Further, the first engaging hole 11 and the second engaging hole 12 are disposed at positions shifted from each other by 90 degrees in the circumferential direction viewed from the axis direction. For this reason, plurality of (four) engaging holes 10 are evenly arranged in the circumferential direction viewed from the axis direction.

In addition, the pair of first engaging protrusions 21 are arranged at point-symmetric positions with respect to the central axis CA viewed from the axis direction. The pair of second engaging protrusions 22 are arranged at point-symmetric positions with respect to the central axis CA viewed from the axis direction. Further, the first engaging protrusion 21 and the second engaging protrusion 22 are disposed at positions shifted from each other by 90 degrees in the circumferential direction viewed from the axis direction. For this reason, the four engaging protrusions 20 are evenly arranged in the circumferential direction viewed from the axis direction.

Note that the first fitting part FP1 has a pair of first grooves 111 respectively corresponding to the pair of first engaging holes 11. In other words, the pair of first grooves 111 respectively correspond to the pair of first engaging protrusions 21. The pair of first grooves 111 each recess from an inner circumference surface of the first fitting part FP1 outward in the radial direction. In addition, each of the pair of first grooves 111 extends from an end surface of the first fitting part FP1 on the axis direction one side S1 toward the axis direction other side S2, so as to connect to a formation position of the corresponding first engaging hole 11 in the axis direction.

In addition, the first fitting part FP1 has a pair of second grooves 112 respectively corresponding to the pair of second engaging holes 12. In other words, the pair of second grooves 112 respectively correspond to the pair of second engaging protrusions 22. The pair of second grooves 112 each recess from the inner circumference surface of the first fitting part FP1 outward in the radial direction. In addition, each of the pair of second grooves 112 extends from an end surface of the first fitting part FP1 on the axis direction one side S1 toward the axis direction other side S2, so as to connect to a formation position of the corresponding second engaging hole 12 in the circumferential direction.

In this structure, the first member 1 and the second member 2 are connected to each other in the axis direction by the following procedure.

First, positions of the pair of first engaging protrusions 21 in the circumferential direction are adjusted to positions of the respectively corresponding first grooves 111 in the circumferential direction. In addition, positions of the pair of second engaging protrusions 22 in the circumferential direction are adjusted to positions of the respectively corresponding second grooves 112 in the circumferential direction.

After that, the pair of first engaging protrusions 21 are set in the respectively corresponding first grooves 111. In addition, the pair of second engaging protrusions 22 are set in the respectively corresponding second grooves 112. Further, in this state, the second member 2 (the second fitting part FP2) is inserted inward in the radial direction of the first member 1 (the first fitting part FP1) from the axis direction one side S1.

In this way, the pair of first engaging protrusions 21 are displaced from the axis direction one side S1 to the axis direction other side S2 along the respectively corresponding first grooves 111. Further, finally, the pair of first engaging protrusions 21 reach the respectively corresponding first engaging holes 11. As a result, the pair of first engaging protrusions 21 are inserted into the respectively corresponding first engaging holes 11 in the radial direction, and are engaged with the corresponding first engaging holes 11 in the axis direction.

In addition, when the second member 2 is inserted inward in the radial direction of the first member 1 from the axis direction one side S1, the pair of second engaging protrusions 22 are displaced from the axis direction one side S1 to the axis direction other side S2 along the respectively corresponding second grooves 112. However, at the time point when the pair of first engaging holes 11 and the pair of first engaging protrusions 21 are engaged with each other in the axis direction, the pair of second engaging protrusions 22 remain in the respectively corresponding second grooves 112, and are not engaged with the corresponding second engaging holes 12.

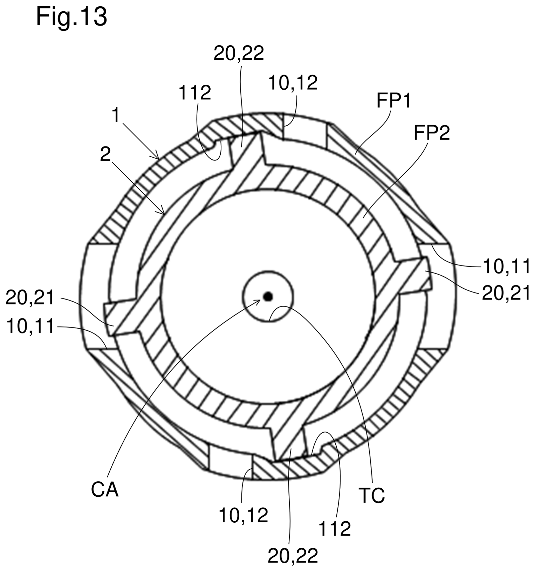

In other words, when one of the first member 1 and the second member 2 is inserted into the other in the axis direction, the first engaging hole 11 and the first engaging protrusion 21 are engaged with each other. On the other hand, the second engaging hole 12 and the second engaging protrusion 22 are not engaged with each other (see FIG. 13).

After the pair of first engaging holes 11 and the pair of first engaging protrusions 21 are engaged with each other in the axis direction, the second member 2 is displaced with respect to the first member 1 in the circumferential direction. This operation allows the plurality of engaging protrusions 20 to be displaced in the circumferential direction.

Note that opening widths of the pair of first engaging holes 11 in the circumferential direction are larger than widths of the respectively corresponding first engaging protrusions 21 in the circumferential direction. For this reason, when the second member 2 is displaced with respect to the first member 1 in the circumferential direction, in the state where the pair of first engaging holes 11 and the pair of first engaging protrusions 21 are engaged with each other in the axis direction, the pair of first engaging protrusions 21 remain to be engaged with the respectively corresponding first engaging holes 11 in the axis direction.

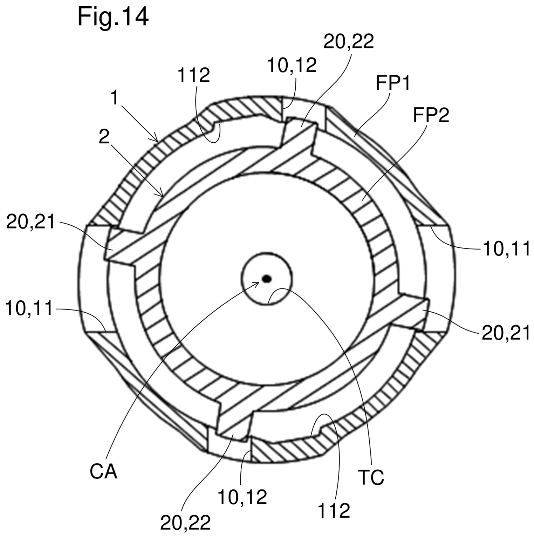

When the second member 2 is displaced with respect to the first member 1 in the circumferential direction, in the state where the pair of first engaging holes 11 and the pair of first engaging protrusions 21 are engaged with each other in the axis direction, the pair of second engaging protrusions 22 reach positions to be respectively engaged with the pair of second engaging holes 12, while the pair of first engaging holes 11 and the pair of first engaging protrusions 21 remain to be engaged with each other in the axis direction. In other words, the pair of second engaging protrusions 22 are inserted into the respectively corresponding second engaging holes 12 in the radial direction, and are engaged with the corresponding second engaging holes 12 in the axis direction (see FIG. 14). In this way, the first member 1 and the second member 2 are connected to each other in the axis direction.

As described above, in this embodiment, the pair of first engaging protrusions 21 are engaged with the respectively corresponding first engaging holes 11, as a first work. After that, the pair of second engaging protrusions 22 are engaged with the respectively corresponding second engaging holes 12 as a second work. In other words, in this embodiment, the first work and the second work are performed separately.

When performing the first work, the first member 1 is elastically deformed so as to increase a first interval, which is an interval between forming portions of the pair of first engaging holes 11 in the radial direction. In this way, in the structure where the pair of first engaging holes 11 (i.e., the pair of first engaging protrusions 21) are disposed at point-symmetric positions with respect to the central axis CA, the pair of first engaging protrusions 21 can be easily inserted into the pair of first engaging holes 11 in the radial direction.

When performing the second work, the first member 1 is elastically deformed so as to increase a second interval, which is an interval between forming portions of the pair of second engaging holes 12 in the radial direction. In this way, in the structure where the pair of second engaging holes 12 (i.e., the pair of second engaging protrusions 22) are disposed at point-symmetric positions with respect to the central axis CA, the pair of second engaging protrusions 22 can be easily inserted into the pair of second engaging holes 12 in the radial direction.

Here, in this embodiment, the first work and the second work are performed separately. For this reason, even if a protrusion length of the pair of first engaging protrusions 21 outward in the radial direction is increased, the work for allowing the pair of first engaging protrusions 21 to be engaged with the pair of first engaging holes 11 can be easily performed. In addition, even if a protrusion length of the pair of second engaging protrusions 22 outward in the radial direction is increased, the work for allowing the pair of second engaging protrusions 22 to be engaged with the pair of second engaging holes 12 can be easily performed.

As the protrusion length of the engaging protrusion 20 outward in the radial direction becomes larger, a backlash between the first member 1 and the second member 2 becomes smaller. Further, as the number of the engaging protrusions 20 becomes larger (e.g., four), a backlash between the first member 1 and the second member 2 becomes smaller.

In this embodiment, because the first work and the second work are performed separately, the protrusion length of the engaging protrusion 20 outward in the radial direction can be larger. In addition, in this embodiment, the number of the engaging holes 10 is four (i.e., the number of the engaging protrusion 20 is four). In this way, a backlash between the first member 1 and the second member 2 can be suppressed, without making it difficult to insert the second member 2 inward in the radial direction of the first member 1 so as to allow the engaging hole 10 and the engaging protrusion 20 to be engaged with each other. In other words, a backlash between components of the coupling member 1000, which are connected to each other in the axis direction, can be suppressed without making it difficult to assemble the coupling member 1000.

Note that in this embodiment, D1 × 1.03 < D is satisfied, where D1 is a distance in the radial direction between forming portions of the pair of first engaging holes 11 in the first member 1 (see FIG. 8), and D is a distance in the radial direction between distal ends in the radial direction of the pair of first engaging protrusions 21 respectively engaged with the pair of first engaging holes 11 (see FIG. 11). In this way, the pair of first engaging holes 11 and the pair of first engaging protrusions 21 can be securely engaged with each other in the axis direction. In other words, the engagement between the pair of first engaging holes 11 and the pair of first engaging protrusions 21 can be prevented from being unlocked.

In addition, in this embodiment, D2 × 1.03 < D is satisfied, where D2 is a distance in the radial direction between forming portions of the pair of second engaging holes 12 in an inner circumference surface of the first member 1 (see FIG. 10), and D is a distance in the radial direction between distal ends in the radial direction of the pair of second engaging protrusions 22 respectively engaged with the pair of second engaging holes 12 (see FIG. 11). In this way, the pair of second engaging holes 12 and the pair of second engaging protrusions 22 can be securely engaged with each other in the axis direction. In other words, the engagement between the pair of second engaging holes 12 and the pair of second engaging protrusions 22 can be prevented from being unlocked.

Note that the above embodiment describes the inkjet recording device where ink flows in the device, but the present disclosure can be applied to a device other than the inkjet recording device, in which liquid other than ink flows.

In addition, this embodiment describes the structure in which the second member is inserted inward in the radial direction of the first member, but it may be possible that the first member is inserted inward in the radial direction of the second member. In this case, the engaging protrusions of the second member protrude inward in the radial direction. The engaging holes may penetrate in the radial direction or may not penetrate.

In addition, this embodiment describes the example in which one pair of first engaging holes are provided to the first member, but the present disclosure is not limited to this, and it may be possible to provide two or more pairs of first engaging holes to the first member. In other words, it may be possible to provide two or more pairs of first engaging protrusions to the second member.

In addition, this embodiment describes the example in which one pair of second engaging holes are provided to the first member, but the present disclosure is not limited to this, and it may be possible to provide two or more pairs of second engaging holes to the first member. In other words, it may be possible to provide two or more pairs of second engaging protrusions to the second member.

## Claims

1. A coupling member (1000) comprising:
a first member (1) as a cylindrical body having a central axis (CA) extending in a predetermined direction, and having a liquid flowing passage inside, and
a second member (2) as a cylindrical body having the central axis (CA) configured to be connected to the first member (1) in the axis direction, having the liquid flowing passage inside, so as to allow the liquid to flow in the axis direction together with the first member (1), wherein
the first member (1) has a plurality of engaging holes (10) arranged with intervals in a circumferential direction, so as to be recessed in a radial direction from a circumference surface of the first member (1),
the second member (2) has a plurality of engaging protrusions (20) arranged with intervals in the circumferential direction, so as to protrude in the radial direction from a circumference surface of the second member (2), the engaging protrusions being respectively inserted into the plurality of engaging holes (10) in the radial direction, so as to be respectively engaged with the plurality of engaging holes (10) in the axis direction,
the plurality of engaging holes (10) include at least one pair of first engaging holes (11) and at least one pair of second engaging holes (12),
the plurality of engaging protrusions (20) include the same number of pairs of first engaging protrusions (21) as the pairs of first engaging holes (11) so as to respectively engage with the pairs of the first engaging holes (11), and the same number of pairs of second engaging protrusions (22) as the pairs of the second engaging holes (12) so as to respectively engage with the pairs of the second engaging holes (12),
when one of the first member (1) and the second member (2) is inserted into the other in the axis direction, the first engaging hole (11) and the first engaging protrusion (21) are engaged with each other, while the second engaging hole (12) and the second engaging protrusion (22) are not engaged, and
in the state where the first engaging hole (11) and the first engaging protrusion (21) are engaged with each other, the second member (2) is displaced in the circumferential direction with respect to the first member (1), so that the second engaging protrusion (22) reaches a position for engaging the second engaging hole (12), while maintaining the engagement between the first engaging hole (11) and the first engaging protrusion (21), and hence the first member (1) and the second member (2) are connected to each other in the axis direction.

2. The coupling member (1000) according to claim 1, wherein
the pair of first engaging holes (11) are arranged at point-symmetric positions with respect to the central axis (CA), and
the pair of second engaging holes (12) are arranged at point-symmetric positions with respect to the central axis (CA).

3. The coupling member (1000) according to claim 2, wherein
one pair of the first engaging holes (11) and one pair of the second engaging holes (12) are disposed, and
the first engaging hole (11) and the second engaging hole (12) are disposed at positions shifted from each other by 90 degrees in the circumferential direction viewed from the axis direction.

4. The coupling member (1000) according to claim 3, wherein
D1 × 1.03 < D is satisfied, where D1 is a distance in the radial direction between forming portions of the pair of first engaging holes (11) in the first member (1), and D is a distance in the radial direction between distal ends in the radial direction of the pair of first engaging protrusions (21).

5. The coupling member (1000) according to claim 3 or 4, wherein
D2 × 1.03 < D is satisfied, where D2 is a distance in the radial direction between forming portions of the pair of second engaging holes (12) in the first member (1), and D is a distance in the radial direction between distal ends in the radial direction of the pair of second engaging protrusions (22).

6. The coupling member (1000) according to any one of claims 1 to 5, wherein
the first member (1) includes a first fitting part (FP1) having a cylindrical shape about the central axis (CA),
the second member (2) includes a second fitting part (FP2) having a cylindrical shape about the central axis (CA), disposed inward in the radial direction of the first fitting part (FP1),
the engaging hole (10) penetrates the first fitting part (FP1) in the radial direction, and
the engaging protrusion (20) protrudes outward in the radial direction from the second fitting part (FP2).

7. An inkjet recording device (500) comprising the coupling member (1000) according to any one of claims 1 to 6, wherein the liquid is ink, and printing is performed using the ink.
